# FASCICULE DE BREVET EUROPEEN

(11) **EP 0 728 880 B1**
(45) Date de publication et mention de la délivrance du brevet: **05.12.2001**
(21) Numéro de dépôt: 95420159.6
(22) Date de dépôt: 16.06.1995
(51) Int. Cl.: E04C 5/18, E04C 5/12

(54) **Dispositif de liaison ou d'ancrage de barres d'armature à haute adhérence pour béton armé, et procédé pour son obtention**
Verbindungs- oder Verankerungsvorrichtung von Bewehrungsstäben hoher Haftung im Stahlbeton und Verfahren zu ihrer Realisierung
Connecting and anchoring device for reinforcing rods with high adherence for reinforced concrete and method of its realization

(30) Priorité: 23.02.1995 FR 9502331
(43) Date de publication de la demande: 28.08.1996
(73) Titulaire: Etablissements A. Mure, F-69003 Lyon (FR)
(72) Inventeur: Lefebvre, Eric, F-69008 Lyon (FR)
(74) Mandataire: Maureau, Philippe

(56) Documents cités:
- DE-B- 2 134 060
- DE-C- 3 131 078
- GB-A- 1 546 253
- GB-A- 2 220 241
- US-A- 3 415 552
- US-A- 4 619 096

## Description

La présente invention a pour objet un dispositif de liaison ou d'ancrage de barres d'armature à haute adhérence pour béton armé, et un procédé pour son obtention.

Lorsqu'il convient de construire un ouvrage en béton armé par tranches, ou lorsque les longueurs de barres d'armature nécessaires ne sont pas disponibles, car étant supérieures à celle des barres standards, il est connu de disposer bout à bout plusieurs barres et de réaliser la liaison entre leurs extrémités.

La solution la plus traditionnelle consiste à faire chevaucher les extrémités des deux barres d'armature, avec une longueur minimale de chevauchement qui est supérieure ou égale à cinquante fois le diamètre des barres. C'est ainsi que, pour des barres d'un diamètre de 40 mm, il convient de réaliser un chevauchement sur une longueur de 2 m. Il convient donc de laisser des extrémités de barres d'armature en attente, ce qui est gênant pour la sécurité du personnel, et peut poser un problème d'encombrement au niveau de la première partie d'ouvrage réalisée. En outre, il convient, lors d'un tel chevauchement, de réaliser une opération de ligature entre les deux extrémités de barres se chevauchant, pour assurer leur tenue avant la coulée du béton.

Il a ensuite été imaginé de réaliser la liaison de deux extrémités de barres en plaçant ces deux extrémités bout à bout, et en les reliant par un manchon qui assure une continuité mécanique. Cette opération de liaison est alors appelée raboutage.

Une première solution consiste à réaliser des filetages coniques aux extrémités des deux barres à assembler, et de les relier par un coupleur ou manchon en forme d'écrou comportant deux filetages coniques, comme décrit dans le document US-A-3 415 552.

Il est également connu de réaliser une telle liaison en réalisant des filetages cylindriques aux extrémités des barres, et en les assemblant à l'aide de manchons formant écrous. Cet assemblage peut être réalisé avec réduction de la section des barres dans la zone filetée, comme décrit dans le document GB-A-1 546 253. Cette réduction de section liée au procédé de fabrication se traduit par une perte de résistance des pièces.

Il est également possible de mettre en oeuvre des filetages cylindriques sans réduction de section en procédant tout d'abord au refoulement à froid ou à chaud des extrémités de barres pour augmenter leur section, l'usinage mis en oeuvre pour l'obtention du filetage permettant de restituer aux extrémités des barres la section qu'elles comportent sur le reste de leur longueur, comme décrit dans les documents FR-A-2 626 600 et FR-A-2 639 054.

Il est également connu de réaliser la liaison entre deux barres en forgeant un coupleur dans une barre femelle, et en filetant l'extrémité mâle de l'autre barre, éventuellement après forgeage, comme décrit dans le document US-A-4 619 096.

Suivant une autre technique, les extrémités des barres d'armature ne sont pas modifiées et leur liaison est réalisée par un manchon serti, comme décrit dans le document US-A-4 241 490 ou le DE-B-2 134 060. Dans un tel cas, il convient de réaliser l'opération de sertissage sur le chantier même, avec nécessité d'utiliser une machine.

Il est également connu de réaliser l'assemblage d'extrémités de barres non filetées, en mettant en oeuvre un manchon dont la face intérieure est lisse, comportant des perçages radiaux taraudés destinés au passage de vis qui pressent les barres contre des surfaces crantées, par exemple en forme de crémaillères, rendues solidaires de la face intérieure du manchon. Cette technique, décrite dans le document GB-A-2 220 241, nécessite un coupleur de dimensions transversales importantes par rapport à celle des barres d'armature à assembler.

Dans les différents cas évoqués précédemment, la section extérieure du manchon peut être cylindrique, polygonale, oblongue ou même carrée.

Dans le béton armé, il convient de réaliser une bonne adhérence des barres d'armature par rapport au béton. Cette adhérence est obtenue par l'intermédiaire d'éléments faisant saillie de la face extérieure des barres d'armature, constitués par des stries encore appelées verrous. En Europe, il s'agit souvent de verrous obliques en forme de croissants, disposés selon deux chants s'étendant chacun sur environ 180°, avec ou sans inversion du sens d'inclinaison des verrous d'un chant à l'autre. Les deux chants peuvent être séparés par des nervures ou des plats longitudinaux. L'adhérence de l'armature au béton peut également être assurée grâce à des verrous s'étendant sur une portion plus faible de la circonférence de l'armature, constituant ainsi plus de deux chants. Elle peut encore être assurée par des marquages en creux dans l'armature, groupés en deux chants ou plus.

De façon connue, les coupleurs ou manchons possèdent une surface lisse. Il en résulte une discontinuité de l'adhérence entre les barres d'armature raboutées et le béton au niveau de la face extérieure du coupleur.

Dans d'autres cas, les parties d'ouvrages devant être solidarisées ont des directions différentes, le plus souvent orthogonales. C'est le cas, par exemple, des murs ou des poteaux qui doivent être solidaires des fondations sur lesquelles ils reposent, ou des planchers par rapport aux murs porteurs ou aux poteaux. Ces éléments à solidariser sont armés par des barres qui sont propres à leur fonction dans l'ouvrage, et il n'est pas possible d'utiliser la mise en continuité de leurs armatures pour les rendre solidaires. Il est connu d'assurer leur solidarisation par prolongement des armatures de l'un, généralement celui qui est réalisé en second, dans le béton de l'autre, de manière à ce qu'elles y soient ancrées. Ainsi, les efforts provenant du second élément d'ouvrage sont transmis par ces armatures prolongées au béton du premier élément d'ouvrage. Les parties d'ancrage et les armatures associées à ces parties d'ancrage étant situées dans deux parties d'ouvrage exécutées lors de phases différentes de la construction, peuvent être liées entre elles de la même manière que les armatures des éléments de construction situées dans la même direction, par recouvrement, ou raboutage, comme indiqué précédemment.

Dans le cas où les armatures transmettent au béton l'effort maximal qu'elles-mêmes peuvent supporter, les règles de calcul indiquent que les armatures doivent être scellées soit sur une longueur droite égale à cinquante fois leur diamètre nominal, soit après façonnage, c'est-à-dire pliage, en tenant compte d'un rayon de courbure qui est fonction du diamètre de la barre d'armature considérée.

Il ressort de ce qui précède que l'ancrage des armatures dans le béton nécessite des dimensions d'armatures importantes qui ont, d'une part, une incidence sur le coût des armatures et, d'autre part, imposent parfois de surdimensionner une partie d'ouvrage pour loger les ancrages d'armatures.

Cette observation vaut également pour les armatures situées à l'intérieur d'une même partie d'ouvrage, dont les extrémités doivent être ancrées dans le béton de cette partie d'ouvrage, afin que leurs parties centrales puissent recevoir correctement les efforts de traction auxquels elles doivent résister.

Le but de l'invention est de fournir un dispositif de liaison entre deux barres d'armature ou un dispositif d'ancrage de barres d'armature, possédant d'excellentes propriétés mécaniques, d'un prix de revient modéré, et permettant l'adhérence du béton sur sa face extérieure.

A cet effet, le dispositif qu'elle concerne, comportant en combinaison au moins une barre d'armature et une pièce mécanique de couplage ou d'ancrage, dans lequel les barres d'armature comportent des éléments faisant saillie de leur surface extérieure, en forme d'éléments obliques ou verrous ou toutes autres aspérités, en saillie ou en creux, conférant aux barres une haute adhérence dans le béton, éventuellement associés à des nervures longitudinales, est caractérisé en ce que la pièce mécanique est réalisée à partir d'un tronçon de barre d'armature à haute adhérence, de diamètre supérieur à celui des barres à assembler ou à ancrer, dans laquelle est ménagé un perçage axial de diamètre sensiblement égal à celui des extrémités de ces barres ou à la plus grande dimension transversale des extrémités de celles-ci, et dans lequel sont disposés des moyens de fixation des extrémités des barres, lesquelles comportent des moyens de fixation complémentaires, cette pièce mécanique constituant, dans le cas de la liaison entre deux barres, un coupleur dans lequel sont engagées et immobilisées les extrémités des deux barres, et dans le cas de l'ancrage d'une extrémité de barre d'armature, formant elle-même le dispositif d'ancrage, étant noyé dans le béton d'une partie d'ouvrage et servant à l'engagement et à l'immobilisation de cette extrémité de la barre dont le reste de la longueur s'étend, soit dans une seconde partie d'ouvrage, soit dans la même partie d'ouvrage que le dispositif d'ancrage.

La pièce mécanique est réalisée dans un matériau de même nuance que celui constitutif des barres. Il existe donc une homogénéité entre les barres et la pièce mécanique. La pièce mécanique selon l'invention étant obtenue par suppression de la partie centrale d'une barre d'armature pour béton armé, elle possède des caractéristiques mécaniques supérieures à celles de la barre d'armature elle-même. En effet, le mode de fabrication d'une barre d'armature pour béton armé, par laminage à chaud ou à froid, donne à la partie périphérique de l'acier des propriétés de résistance supérieures à celles obtenues au coeur de l'acier. En outre, il s'agit d'un produit d'un prix de revient modéré, puisque les barres d'armature ne sont pas des produits coûteux, de telle sorte que, dans le cas de la liaison entre deux barres, le prix du coupleur, malgré l'usinage auquel il doit être soumis, notamment pour former le perçage central, demeure inférieur ou égal à celui d'un coupleur traditionnel, avec l'avantage supplémentaire de posséder une surface extérieure présentant la même géométrie que la surface extérieure des barres assemblées l'une à l'autre. Dans le cas où l'on constitue un dispositif d'ancrage, il faut noter que c'est la pièce mécanique elle-même qui suffit à réaliser l'ancrage, sa longueur et sa section étant déterminées pour satisfaire aux conditions d'ancrage requises. Compte tenu du fait que le diamètre de la pièce mécanique est sensiblement supérieur à celui de la barre d'armature, la surface de la pièce en contact avec le béton est relativement importante, et sensiblement supérieure à la surface de contact d'une barre d'armature de plus faible section, pour une longueur considérée. Les qualités de l'ancrage résultant essentiellement de la surface de contact entre le dispositif d'ancrage et le béton, il est possible, grâce à l'invention, de réduire sensiblement les dimensions de l'ancrage par rapport aux pratiques actuelles. Cela permet d'éviter d'avoir à surdimensionner certaines parties d'ouvrage pour loger les ancrages des armatures.

Suivant une possibilité, la pièce mécanique présente un perçage axial débouchant fileté, destiné à recevoir l'extrémité filetée de chaque barre qui lui est associée. On constitue ainsi un manchon ou coupleur.

Dans une première forme d'exécution, le perçage axial de la pièce mécanique présente au moins un filetage conique destiné à recevoir l'extrémité à filetage conique d'une barre qui lui est associée.

Dans une seconde forme d'exécution, le perçage axial de la pièce mécanique présente un filetage cylindrique, à filets parallèles, destiné à recevoir l'extrémité à filetage cylindrique de chaque barre qui lui est associée.

Dans ces deux formes d'exécution, le profil des filets peut être choisi parmi les différents profils connus en filetage, ou créé spécifiquement pour l'usage particulier au raboutage de barres d'armature à haute adhérence pour le béton armé, ou l'ancrage de barres d'armature à haute adhérence pour béton armé.

Selon une autre possibilité, l'intérieur du perçage axial de la pièce mécanique est équipé de moyens de fixation de chaque extrémité de barre, par serrage radial de celle-ci à travers des perçages radiaux et appui contre des surfaces en relief ménagées à l'intérieur du perçage axial.

Suivant encore une autre forme d'exécution, la pièce mécanique présente un perçage axial lisse ou rugueux permettant l'assemblage de chaque barre d'armature par collage.

Afin d'optimiser le coût du raboutage de deux barres, le manchon peut être muni, d'un côté, d'un dispositif de fixation et, de l'autre, d'un autre dispositif de fixation décrit parmi ceux présentés précédemment. Il est ainsi possible de prévoir des filetages différents aux deux extrémités, ou de prévoir une extrémité filetée et l'autre extrémité munie de moyens de serrage radial.

Avantageusement, pour des couples barres-pièces mécaniques réalisés dans un acier de même nuance, et pour un procédé de liaison par filetage, avec conservation dans le filetage de la section nominale de la barre, le dispositif comporte les associations suivantes dans lesquelles le diamètre extérieur des éléments est exprimé en mm :
- barre de 14 - manchon de 25,
- barre de 16 ou de 20 - manchon de 32,
- barre de 25 - manchon de 40.

Un procédé pour la réalisation d'un tel dispositif consiste tout d'abord à découper une barre d'armature à haute adhérence en tronçons, chacun de longueur égale à celle d'une pièce mécanique, et à réaliser un perçage axial dans chaque tronçon, ou à réaliser un forage central long dans une barre d'armature avant de la découper en tronçons, chacun de longueur égale à celle d'un manchon, puis à usiner l'intérieur du perçage pour ménager à l'intérieur de celui-ci des moyens de fixation des extrémités de barres à assembler, et à réaliser les perçages radiaux éventuels.

Dans le cas d'un dispositif d'ancrage, le perçage axial peut ou non être débouchant. Toutes les caractéristiques décrites précédemment, dans le cas d'une pièce mécanique comportant un perçage débouchant, sont valables dans le cas d'une pièce mécanique comportant un perçage non débouchant et destiné à un dispositif d'ancrage. La longueur d'un tel dispositif d'ancrage est déduite de la longueur de scellement droit de l'armature à ancrer et du rapport entre le diamètre de l'armature à ancrer et celui du dispositif d'ancrage.

L'invention concerne également une armature pour béton armé constituée par des barres d'armature à haute adhérence, dont au moins les extrémités de certaines d'entre elles sont reliées ou sont ancrées à l'aide de pièces mécaniques, comme défini précédemment, de telle sorte que tous les constituants de l'assemblage possèdent les mêmes caractéristiques d'adhérence dans le béton.

De toute façon, l'invention sera bien comprise à l'aide de la description qui suit, en référence au dessin schématique annexé représentant, à titre d'exemples non limitatifs, plusieurs formes d'exécution de ce dispositif :
Figure 1 est une vue d'une barre d'armature destinée à la réalisation de manchons de liaison ou d'ancrage ;
Figures 2 et 3 sont deux vues d'un tronçon destiné à former un manchon au cours de deux phases de la réalisation d'un manchon, ces vues étant en coupe longitudinale et à échelle agrandie par rapport à la figure 1 ;
Figure 4 est une vue du coupleur de figure 3 après assemblage d'une extrémité de barre ;
Figure 5 est une vue en coupe longitudinale d'un autre coupleur ;
Figure 6 est une vue en coupe transversale du coupleur de figure 5 selon la ligne VI-VI de figure 5 ;
Figure 7 est une vue extérieure de la liaison de deux barres d'armature par le coupleur de figures 3 ou 5.
Figures 8 à 10 sont trois vues schématiques illustrant l'utilisation du dispositif selon l'invention dans des applications d'ancrage de barres d'armature respectivement pour la solidarisation d'un poteau avec une semelle de fondation, d'un plancher avec un voile porteur, et d'une extrémité d'une armature de poutre reposant sur un appui ;
Figures 11 et 12 sont deux vues d'une pièce mécanique destinée à former un dispositif d'ancrage, au cours de deux phases de la réalisation de ce dispositif, ces vues étant en coupe longitudinale et à échelle agrandie ;
Figure 13 est une vue du dispositif de figure 12 après assemblage d'une extrémité de barre.

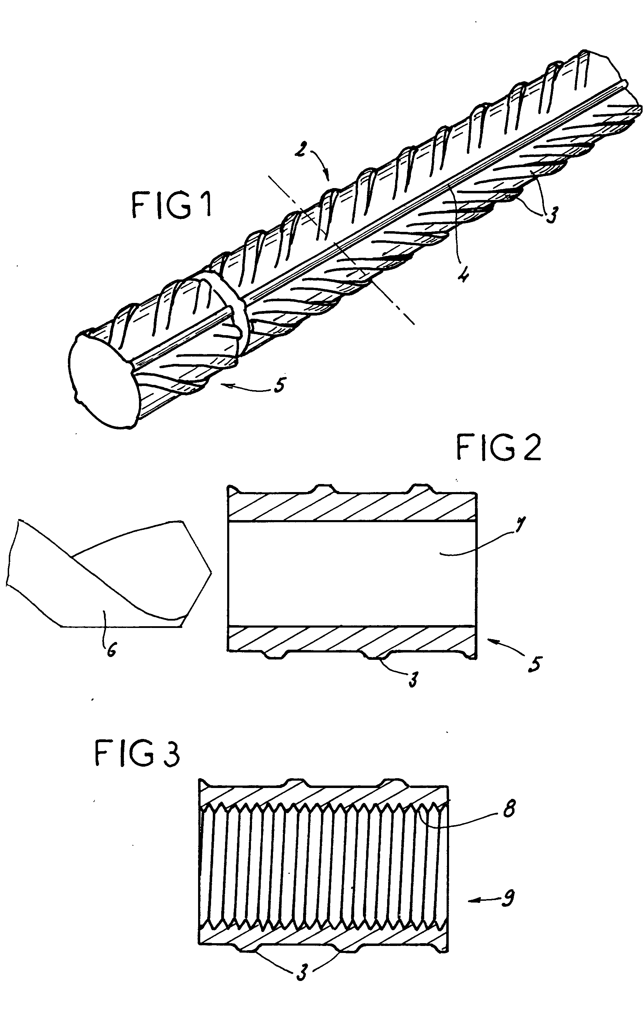

La figure 1 représente une barre d'armature en acier 2 à haute adhérence pour béton armé, comprenant, faisant saillie de sa surface extérieure, des verrous 3 en croissants disposés de façon oblique. Chaque série de verrous 3 s'étend sur un chant disposé suivant environ 180° de la périphérie de la barre 2. Chaque chant est séparé du chant voisin par une nervure longitudinale 4 faisant également saillie par rapport à la surface de la barre.

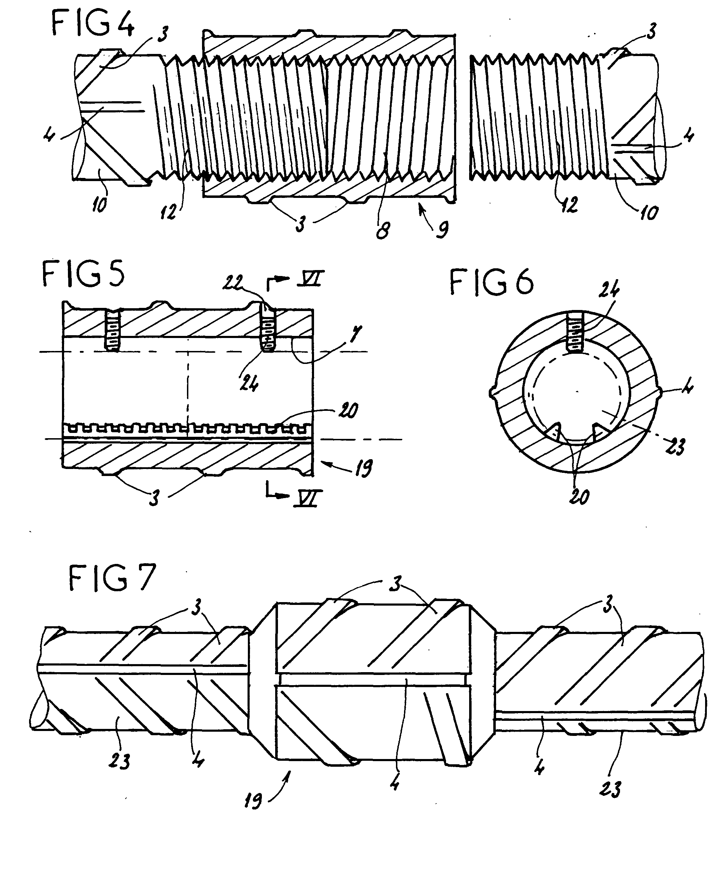

Pour obtenir des éléments de liaison entre barres, la barre 2 est découpée transversalement en tronçons 5. Le tronçon 5 de figure 1 est alors percé à l'aide d'un outil 6 pour présenter un perçage 7 central et longitudinal. Au cours d'une autre opération d'usinage, il est procédé à la réalisation dans le perçage 7 d'un filetage cylindrique 8 permettant d'obtenir, à partir du tronçon 5, un coupleur 9. Ce coupleur 9 est destiné à réaliser l'assemblage de deux barres 10 d'armature à haute adhérence comportant elles aussi des verrous 3 et des nervures 4 sur leurs faces extérieures. Chaque extrémité d'une barre 10 comporte un filetage cylindrique 12 destiné à son vissage dans le filetage 8 du coupleur 9. Comme montré notamment à la figure 4, la barre d'acier 2 à partir de laquelle est réalisé le coupleur 9 est de section supérieure à celle des barres 10, la différence de section étant telle qu'après réalisation du perçage 7 et du filetage cylindrique 8, l'épaisseur de matière du coupleur 9 soit suffisante pour fournir la résistance mécanique souhaitée.

Il est intéressant de noter que la surface extérieure du coupleur 9 possède la même géométrie que celle des barres 10 à assembler, de telle sorte que l'adhérence sur le béton est réalisée également au niveau du coupleur.

Les figures 5 et 6 représentent un coupleur 19 réalisé comme le coupleur 9 à partir d'un tronçon 5 de barres d'armature à haute adhérence, dans lequel a été ménagé un perçage 7. Dans ce cas, deux éléments longitudinaux en forme de crémaillères 20 sont soudés dans le perçage 7, et au moins deux perçages 22 sont ménagés dans la paroi du coupleur, du côté opposé aux crémaillères 20. En pratique, les extrémités de deux barres d'armature 23 à haute adhérence sont engagées dans le coupleur 19, et sont maintenues bloquées contre les crémaillères 20 par l'intermédiaire de vis pointeaux 24 traversant les trous 22 qui sont filetés.

La figure 7 montre clairement que, dans ce cas encore, la surface extérieure du coupleur 19, dont les extrémités sont chanfreinées, possède la même géométrie que la surface extérieure des barres à assembler.

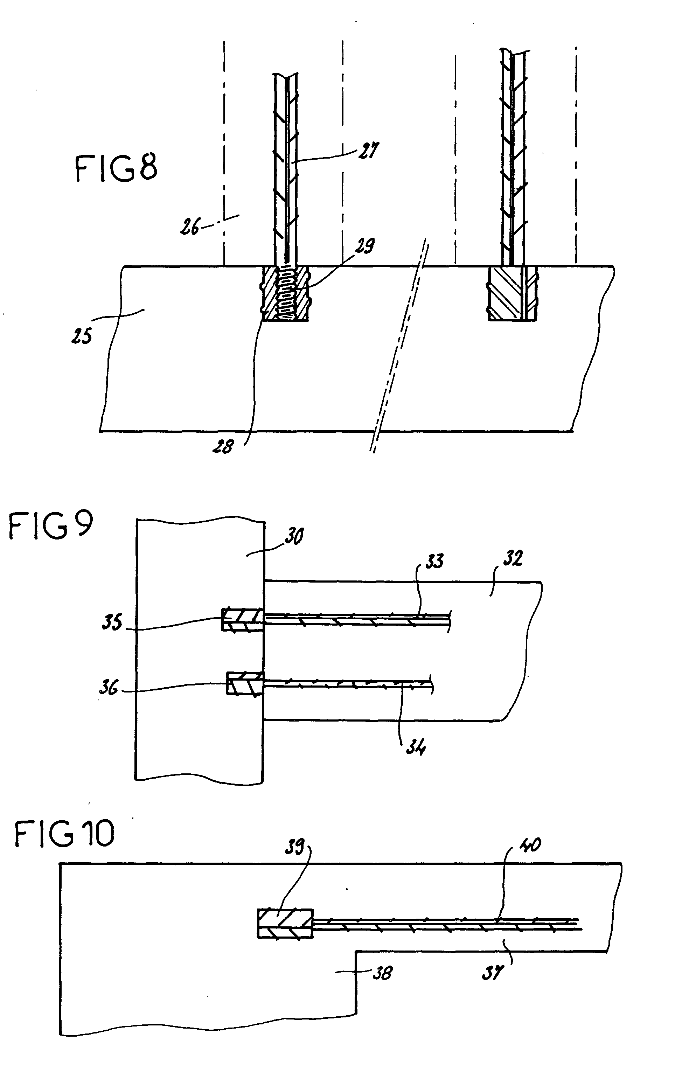

La figure 8 représente, de façon très schématique, une partie d'ouvrage comportant une semelle de fondation 25 en béton à partir de laquelle s'étendent deux poteaux verticaux 26. Chaque poteau 26 comporte une armature en béton constituée par des barres 27, similaires à celles 10 décrites précédemment. Chaque barre 27 est ancrée dans la semelle de fondation 25. A cet effet, dans la semelle de fondation 25 est noyé un manchon 28 similaire au manchon 9 de figure 3, par exemple, noyé dans la semelle 25, affleurant de celle-ci, et dans lequel est vissée l'extrémité inférieure filetée 29 de la barre 27. A la figure 8, le manchon 28 est représenté en coupe dans la partie gauche et en extérieur dans la partie droite.

La figure 9 représente un ouvrage comportant un voile porteur 30 pour un plancher 32. La solidarisation est réalisée par deux brins d'armature respectivement 33 et 34, celui 33 étant d'un diamètre supérieur à celui 34. L'ancrage des barres dans le voile porteur 30 est réalisé par l'intermédiaire de manchons respectivement 35, 36 similaires au manchon 28.

Il est à noter que cette technique permet de différencier le diamètre des barres 33 et 34 en fonction de leur localisation, ce qui n'est pas possible lorsque l'ancrage est réalisé par courbure de la partie centrale d'une même barre dont les deux brins sont noyés dans le plancher.

La figure 10 représente une poutre 37 associée à un appui 38. A l'intérieur de la poutre 37 sont logées des barres d'armature 40, dont chacune est ancrée au niveau de l'appui 38 par l'intermédiaire d'un manchon 39 similaire au manchon 28 de figure 8.

Il ressort clairement des trois formes d'exécution qui précèdent que l'ancrage réalisé est très compact, ce qui permet éventuellement de limiter le dimensionnement des parties d'ouvrage.

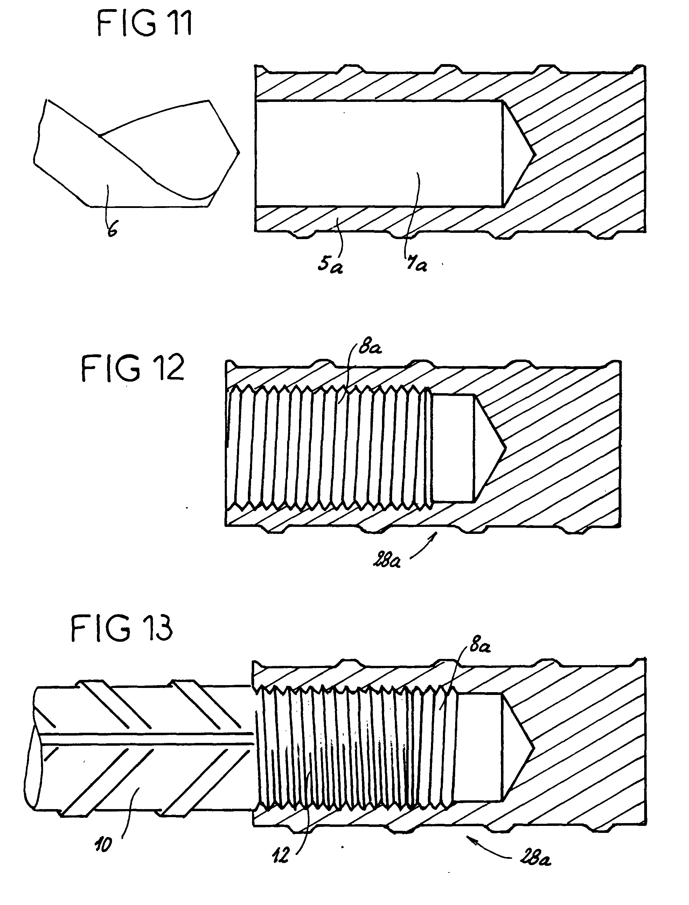

Les figures 11 à 13 représentent une autre possibilité de réalisation de dispositif d'ancrage. Comme montré à la figure 11, un dispositif d'ancrage peut être réalisé à partir d'une pièce 5a constituée par un tronçon de barre d'armature, dans lequel est usiné, à l'aide d'un outil 6, un perçage axial 7a non débouchant.

Comme montré à la figure 12, ce perçage est usiné avec ménagement d'un filetage intérieur 8a. Cette opération permet d'obtenir un dispositif d'ancrage désigné par la référence 28a.

La figure 13 représente ce dispositif d'ancrage 28a, dans lequel est fixée l'extrémité filetée 12 d'une barre 10.

Comme il ressort de ce qui précède, l'invention apporte une grande amélioration à la technique existante en fournissant un dispositif de liaison et d'ancrage de barres d'armature à haute adhérence, obtenu de façon simple, d'un coût peu élevé, et possédant la géométrie de la surface extérieure des barres à assembler.

Comme il va de soi, l'invention ne se limite pas aux seules formes d'exécution de ce dispositif, décrites ci-dessus à titre d'exemples, elle en embrasse au contraire toutes les variantes couvertes par la teneur des revendications. C'est ainsi notamment que la forme des éléments faisant saillie des barres d'armature pourrait être différente, que les moyens de blocage des extrémités de barres à l'intérieur du coupleur pourraient être différents, ou encore que la barre à partir de laquelle sont obtenus les coupleurs pourrait subir un forage long pour réaliser le ménagement du perçage central, avant d'être découpée en tronçons, chacun de longueur égale à celle d'un coupleur, sans que l'on sorte pour autant du cadre de l'invention.

## Revendications

1. Dispositif de liaison ou d'ancrage de barres d'armature à haute adhérence pour béton armé, comportant en combinaison au moins une barre d'armature et une pièce mécanique de couplage ou d'ancrage, dans lequel les barres d'armature (10, 23) comportent des éléments faisant saillie de leur surface extérieure, en forme d'éléments obliques ou verrous (3) ou toutes autres aspérités, en saillie ou en creux, conférant aux barres une haute adhérence dans le béton, éventuellement associés à des nervures longitudinales (4), **caractérisé en ce que** la pièce mécanique (9, 19, 29, 35, 36, 39) est réalisée à partir d'un tronçon (5) de barre d'armature à haute adhérence, de diamètre supérieur à celui des barres à assembler ou à ancrer, dans laquelle est ménagé un perçage axial (7) de diamètre sensiblement égal à celui des extrémités de ces barres ou à la plus grande dimension transversale des extrémités de celles-ci, et dans lequel sont disposés des moyens de fixation (8, 20, 24, 29) des extrémités des barres (10, 23, 27, 33, 34, 40), lesquelles comportent des moyens de fixation complémentaires, cette pièce mécanique constituant, dans le cas de la liaison entre deux barres, un coupleur dans lequel sont engagées et immobilisées les extrémités des deux barres, et dans le cas de l'ancrage d'une extrémité de barre d'armature, formant elle-même le dispositif d'ancrage, étant noyé dans le béton d'une partie d'ouvrage et servant à l'engagement et à l'immobilisation de cette extrémité de la barre dont le reste de la longueur s'étend, soit dans une seconde partie d'ouvrage, soit dans la même partie d'ouvrage que le dispositif d'ancrage.

2. Dispositif selon la revendication 1, **caractérisé en ce que** la pièce mécanique (9, 29) présente un perçage axial fileté (7, 8), destiné à recevoir l'extrémité filetée (12) de chaque barre (10) qui lui est associée.

3. Dispositif selon la revendication 2, **caractérisé en ce que** le perçage axial de la pièce mécanique présente au moins un filetage conique destiné à recevoir l'extrémité à filetage conique d'une barre qui lui est associée.

4. Dispositif selon la revendication 2, **caractérisé en ce que** le perçage axial (7) de la pièce mécanique présente un filetage cylindrique (8), à filets parallèles, destiné à recevoir l'extrémité à filetage cylindrique (12) de chaque barre (10) qui lui est associée.

5. Dispositif selon la revendication 1, **caractérisé en ce que** l'intérieur du perçage axial (7) de la pièce mécanique (19) est équipé de moyens de fixation de chaque extrémité de barre (23), par serrage radial de celle-ci à travers des perçages radiaux et appui contre des surfaces en relief (20) ménagées à l'intérieur du perçage axial.

6. Dispositif selon l'une quelconque des revendications 1 à 5, **caractérisé en ce que**, dans le cas de la liaison entre deux barres (10), la pièce mécanique (9) comporte un perçage axial débouchant.

7. Dispositif selon l'une quelconque des revendications 1 à 5, **caractérisé en ce que**, dans le cas de l'ancrage d'une barre, la pièce mécanique (28a) présente un perçage axial (7a) non débouchant.

8. Dispositif selon l'une quelconque des revendications 1 à 7, **caractérisé en ce que** pour des couples barres-pièces mécaniques réalisés dans un acier de même nuance, et pour un procédé de liaison par filetage, avec conservation dans le filetage de la section nominale de la barre, il comporte les associations suivantes dans lesquelles le diamètre extérieur des éléments est exprimé en mm :
- barre de 14 - manchon de 25,
- barre de 16 ou de 20 - manchon de 32,
- barre de 25 - manchon de 40.

9. Procédé pour la réalisation d'un dispositif de liaison ou d'ancrage selon l'une des revendications 1 à 8, **caractérisé en ce qu'**il consiste, tout d'abord, à découper une barre d'armature (2) à haute adhérence en tronçons (5), chacun de longueur égale à celle d'une pièce mécanique (9, 19), et à réaliser un perçage axial dans chaque tronçon (5), ou à réaliser un forage central long dans une barre d'armature avant de la découper en tronçons (5), chacun de longueur égale à celle d'un manchon (9, 19), puis à usiner l'intérieur du perçage (7) pour ménager à l'intérieur de celui-ci des moyens de fixation des extrémités de barres à assembler et à réaliser les perçages radiaux éventuels.

10. Armature pour béton armé constituée par des barres d'armature à haute adhérence, dont au moins les extrémités de certaines d'entre elles sont reliées ou sont ancrées à l'aide de pièces mécaniques conformément au dispositif selon l'une des revendications 1 à 8, de telle sorte que tous les constituants de l'assemblage possèdent les mêmes caractéristiques d'adhérence dans le béton.

## Patentansprüche

1. Anordnung zur Verbindung oder Verankerung von Bewehrungsstäben mit hohem Haftvermögen für Stahlbeton, die eine Kombination aus mindestens einem Bewehrungsstab und einem mechanischen Kopplungs- oder Verankerungsteil aufweist und bei der die Bewehrungsstäbe (10, 23) auf ihrer Außenseite vorstehende Elemente in Form von schrägen Elementen oder Riegeln (3) oder sonstigen anderen hervorstehenden oder vertieften Rauhheiten aufweisen, die den Stäben ein hohes Haftvermögen im Beton verleihen, wobei ihnen gegebenenfalls Längsrippen (4) zugeordnet sind,
**dadurch gekennzeichnet,**
**daß** das mechanische Teil (9, 19, 29, 35, 36, 39) aus einem Abschnitt (4) eines Bewehrungsstabs mit hohem Haftvermögen hergestellt ist, dessen Durchmesser größer als der der zu verbindenden oder zu verankernden Stäbe ist und in dem eine axiale Bohrung (7) vorgesehen ist, deren Durchmesser im wesentlichen gleich dem der Enden dieser Stäbe oder der größten Querabmessung deren Enden ist und in der Einrichtungen (8, 20, 24, 29) zur Befestigung der Enden der Stäbe (10, 23, 27, 33, 34, 40) angeordnet sind, wobei diese Stäbe komplementäre Befestigungseinrichtungen aufweisen, wobei dieses mechanische Teil im Fall der Verbindung zwischen zwei Stäben einen Koppler bildet, mit dem die Enden der beiden Stäbe in Eingriff stehen und in dem sie arretiert sind, und im Fall der Verankerung eines Bewehrungsstabendes selbst die Verankerungsanordnung bildet, wobei es in den Beton eines Bauwerkteils eingelassen ist und zum Eingriff mit und zum Festhalten von diesem Ende des Stabs dient, dessen restliche Länge sich entweder in ein zweites Bauwerkteil oder in dasselbe Bauwerkteil wie die Verankerungsanordnung erstreckt.

2. Anordnung nach Anspruch 1,
**dadurch gekennzeichnet,**
**daß** das mechanische Teil (9, 29) eine mit Gewinde versehene axiale Bohrung (7, 8) aufweist, die dazu bestimmt ist, das mit Gewinde versehene Ende (12) von jedem ihr zugeordneten Stab (10) aufzunehmen.

3. Anordnung nach Anspruch 2,
**dadurch gekennzeichnet,**
**daß** die axiale Bohrung des mechanischen Teils mindestens ein konisches Gewinde aufweist, das dazu bestimmt ist, das ein konisches Gewinde aufweisende Ende von einem ihr zugeordneten Stab aufzunehmen.

4. Anordnung nach Anspruch 2,
**dadurch gekennzeichnet,**
**daß** die axiale Bohrung (7) des mechanischen Teils ein zylindrisches Gewinde (8) mit parallelen Gewindegängen aufweist, das dazu bestimmt ist, das ein zylindrisches Gewinde (12) aufweisende Ende von jedem ihm zugeordneten Stab (10) aufzunehmen.

5. Anordnung nach Anspruch 1,
**dadurch gekennzeichnet,**
**daß** das Innere der axialen Bohrung (7) des mechanischen Teils (19) mit Einrichtungen zur Befestigung jedes Stabendes (23) versehen ist, und zwar durch radiales Verklemmen dieses Stabendes durch radiale Bohrungen und Andrücken gegen im Inneren der axialen Bohrung vorgesehene Reliefflächen (20).

6. Anordnung nach einem der Ansprüche 1 bis 5,
**dadurch gekennzeichnet,**
**daß** das mechanische Teil (9) im Fall der Verbindung zwischen zwei Stäben (10) eine durchgehende axiale Bohrung aufweist.

7. Anordnung nach einem der Ansprüche 1 bis 5,
**dadurch gekennzeichnet,**
**daß** das mechanische Teil (28a) im Fall der Verankerung eines Stabs eine nicht durchgehende axiale Bohrung (7a) aufweist.

8. Anordnung nach einem der Ansprüche 1 bis 7,
**dadurch gekennzeichnet,**
**daß** sie bei Paaren von Stäben und mechanischen Teilen, die aus einem Stahl der gleichen Sorte bestehen, und bei einem Verbindungsverfahren mit Gewinden, wobei der Nennquerschnitt des Stabs im Gewinde beibehalten wird, die folgenden Kombinationen aufweist, bei denen der Außendurchmesser der Elemente in mm ausgedrückt ist:
- Stab von 14 - Muffe von 25,
- Stab von 16 oder von 20 - Muffe von 32,
- Stab von 25 - Muffe von 40.

9. Verfahren zur Herstellung einer Verbindungsoder Verankerungsanordnung nach einem der Ansprüche 1 bis 8,
**dadurch gekennzeichnet,**
**daß** es darin besteht, daß zuerst ein Bewehrungsstab (2) mit hohem Haftvermögen in Abschnitte (5) geschnitten wird, deren Länge jeweils gleich der eines mechanischen Teils (9, 19) ist, und daß in jedem Abschnitt (5) eine axiale Bohrung hergestellt wird,
oder daß längs eines Bewehrungsstabs eine zentrale Bohrung hergestellt wird, bevor er in Abschnitte (5) geschnitten wird, deren Länge jeweils gleich der einer Muffe (9, 19) ist, und daß dann das Innere der Bohrung (7) bearbeitet wird, um in dieser Einrichtungen zur Befestigung der zu verbindenden Stabenden zu bilden und gegebenenfalls die radialen Bohrungen herzustellen.

10. Bewehrung für Stahlbeton, bestehend aus Bewehrungsstäben mit hohem Haftvermögen, bei denen zumindest die Enden von einigen von ihnen mit Hilfe von mechanischen Teilen gemäß der Anordnung nach einem der Ansprüche 1 bis 8 verbunden oder verankert sind, so daß alle Bestandteile der Verbindungsanordnung die gleichen Hafteigenschaften im Beton besitzen.

## Claims

1. A high-adhesion joining or anchoring device for reinforcing rods for reinforced concrete, comprising at least one reinforcing rod and one mechanical coupling or anchoring part in combination, wherein the reinforcing rods (10, 23) comprise elements which protrude from their outside surface in the shape of oblique elements or locking devices (3) or any other regions of unevenness, as protrusions or hollows, which impart high adhesion to the rods within the concrete, and which are optionally associated with longitudinal ribs (4), **characterised in that** that the mechanical part (9, 19, 29, 35, 36, 39) is formed from a section (5) of high-adhesion reinforcing rod which has a diameter greater than that of the rods to be assembled or anchored, in which an axial bore (7) is disposed which has a diameter substantially equal to that of the ends of said rods or to the largest transverse dimension of the ends thereof, and in which fixing means (8, 20, 24, 29) for the ends of the rods (10, 23, 27, 33, 34, 40) are disposed, which ends comprise complementary fixing means, said mechanical part forming, in the case of a joint between two rods, a coupling in which the ends of the two rods latch and are immobilised, wherein for anchoring an end of a reinforcing rod said mechanical part itself forms the anchoring device, being immersed in the concrete of part of the work and serving for the latching and immobilisation of said end of the rod from which the remainder of the length extends, either into a second part of the work or into the same part of the work as the anchoring device.

2. A device according to claim 1, **characterised in that** that the mechanical part (9, 29) comprises a threaded axial bore (7, 8) which is intended to receive the threaded end (12) of each rod (10) which is associated with it.

3. A device according to claim 2, **characterised in that** the axial bore of the mechanical part comprises at least one tapered thread which is intended to receive the tapered threaded end of a rod which is associated with it.

4. A device according to claim 2, **characterised in that** that the axial bore (7) of the mechanical part comprises a screw thread (8) with parallel threads which is intended to receive the screw-threaded end (12) of each rod (10) which is associated with it.

5. A device according to claim 1, **characterised in that** the interior of the axial bore ( 7) of the mechanical part (19) is equipped with means of fixing each rod end (23), by the radial clamping thereof across the radial bores and by support against surfaces in relief (20) disposed inside the axial bore.

6. A device according to any one of claims 1 to 5, **characterised in that** for a joint between two rods (10) the mechanical part (9) comprises an open axial bore.

7. A device according to any one of claims 1 to 5, **characterised in that** for the anchoring of a rod the mechanical part (28a) comprises a blind axial bore (7a).

8. A device according to any one of claims to 7, **characterised in that** for rod/mechanical part couplings produced from steel of the same grade, and for a joining procedure by means of thread cutting with maintenance within the thread of the nominal section of the rod, said device comprises the following relationships in which the outside diameter of the elements is expressed in mm
- rod 14 - sleeve 25,
- rod 16 or 20 - sleeve 32,
- rod 25 - sleeve 40.

9. A method of producing a joining or anchoring device according to any one of claims 1 to 8, **characterised in that** it firstly consists of cutting a high-adhesion reinforcing rod (2) into sections (5) which are each of length equal to that of a mechanical part (9, 19), and of forming an axial bore in each section (5), or of forming a long central bore in a reinforcing rod before cutting it into sections (5), each of length equal to that of a sleeve (9, 19), and then machining the inside of the bore (7) in order to provide, in the interior thereof, fixing means for the ends of rods to be assembled, and optionally forming radial bores.

10. A reinforcement for reinforced concrete formed by high-adhesion reinforcing rods, at least the ends of some of which are joined or are anchored by means of mechanical parts in accordance with the device according to claims 1 to 8, so that all the constituents of the assembly possess the same characteristics of adhesion in the concrete.
